# EUROPÄISCHE PATENTSCHRIFT

(11) **EP 0 641 068 B1**
(45) Veröffentlichungstag und Bekanntmachung des Hinweises auf die Patenterteilung: **14.05.1997**
(21) Anmeldenummer: 94111560.2
(22) Anmeldetag: 25.07.1994
(51) Int. Cl.: H02P 8/36, H02P 8/22

(54) **Fehlerkorrekturverfahren für Schrittmotoren**
Error correcting method for stepper motors
Procédé de correction d'erreur pour moteurs pas-à-pas

(30) Priorität: 28.08.1993 DE 4329057
(43) Veröffentlichungstag der Anmeldung: 01.03.1995
(73) Patentinhaber: DRE-Dr. RISS ELLIPSOMETERBAU GmbH, D-23909 Ratzeburg (DE)
(72) Erfinder: Riss, Udo, D-23909 Ratzeburg (DE)
(74) Vertreter: Vollmann, Heiko, Dipl.-Ing.

(56) Entgegenhaltungen:
- EP-A- 0 525 468
- WO-A-94/08279
- DE-A- 3 906 838
- DE-A- 4 233 881
- US-A- 3 795 854
- VDI, Bd. 566, 5.November 1985 - 6.November 1989 DE, Seiten 261-272, W.HOLZAPFEL UND U.RISS 'Automatisches Transmissionsellipsometer'
- 4TH CONFERENCE ON POWER ELECTRONICS AND VARIABLE-SPEED DRIVES, 17.Juli 1990 - 19.Juli 1990 UK, Seiten 253-257, XP 000143620 M.F.RAHMAN & AL. 'Design approaches for microstepping step motor controllers'

## Beschreibung

Die Erfindung betrifft ein Fehlerkorrekturverfahren zum Ansteuern von Schrittmotoren im Zwischenschrittbetrieb gemäß den im Oberbegriff des Anspruchs 1 angegebenen Merkmalen.

Die Winkelauflösung eines Schrittmotors ist bei einer standardmäßigen Ansteuerung durch die Anzahl von Vollschritten pro Umdrehung festgelegt. Bei einem Fünfphasenschrittmotor mit 500 Vollschritten liegt die Auflösung beispielsweise bei 0,72°. Die Schrittauflösung kann signifikant durch Zwischenschrittbetrieb erhöht werden.

Unter Zwischenschrittbetrieb wird dabei eine elektronische Schrittwinkelunterteilung des Schrittmotors verstanden, die es ermöglicht, mehrere Positionen zwischen den Vollschritten anzufahren. Lösungen zur Realisierung eines derartigen Zwischenschrittbetriebes für Zwei-, Vier- oder Fünfphasenschrittmotoren sind bereits bekannt, sie besitzen entweder lineare oder getaktete Endstufen. Eine spezielle Form einer Zwischenschrittansteuerung mit getakteter Endstufe ist beispielsweise in der Offenlegungssschrift DE 39 06 838 A1 beschrieben.

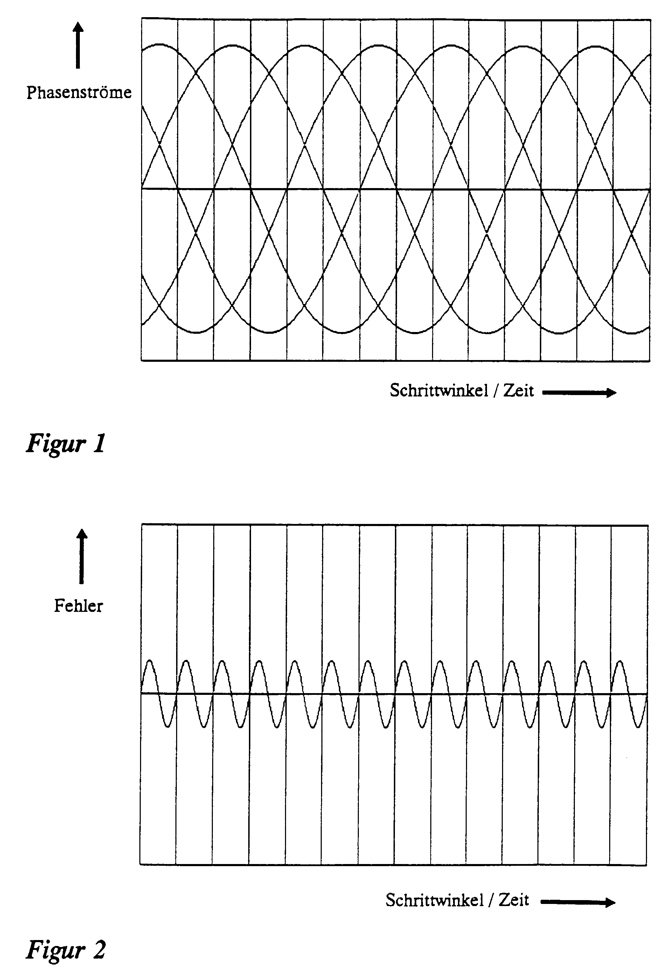

Die Ansteuerung eines Fünfphasenschrittmotors kann z.B. durch 5 jeweils um 72° phasenverschobene sinusförmige Ströme erfolgen, wie in Figur 1 dargestellt. Eine derartige Ansteuerung wird als Sinusstromsteuerung bezeichnet. Bei einer solchen Ansteuerung weist der Motor für jeden Vollschritt näherungsweise ein ähnliches Drehmoment auf.

Alle diese bekannten Zwischenschrittansteuerungen sind jedoch so realisiert, daß die Genauigkeit beim Anfahren einer beliebigen Position durch die mechanische Genauigkeit des Schrittmotors begrenzt wird.

Zur weiteren direkten Fehlerkorrektur eines Schrittmotors ist lediglich ein Servoverfahren bekannt, bei dem die aktuelle Position mit einem Winkelmeßgerät ermittelt wird und der Schrittmotoransteuerung die Abweichung von der Sollposition über einen digitalen Regelkreis zur Fehlerkorrektur mitgeteilt wird (DE-OS 21 64 715). Ähnliche Verfahren sind auch bei analogen Servomotoren bekannt.

Der Nachteil dieses Fehlerkorrekturverfahrens besteht in der großen Baugröße, der Fehleranfälligkeit und dem hohen Kostenaufwand für das Winkelmeßgerät.

Eine direkte Übernahme eines Fehlerkorrekturverfahrens für getriebebehaftete Drehverstellsysteme (VDI Berichte 566, Automatisches Transmissionsellipsometer, Seite 264 und 265) auf Schrittmotoren führt zu stark unbefriedigenden Ergebnissen, da ein Schrittmotor in Vergleich zu getriebebehaften Systemen ein anderes Verhalten aufweist.

Die statische Fehlerkorrektur bei Schrittmotoren ist heutzutage schon sehr gut. Es wird hierzu nur beispielhaft auf EP 0 525 468 A2 verwiesen.

Besonderheiten, die bei der direkten Fehlerkorrektur eines Schrittmotors jedoch beachtet werden müssen, sind folgende:
- Ein Schrittmotor ist ein elastisches nichtlineares System, dessen Federkonstante durch das über Spulen induzierte Magnetfeld bestimmt wird.
- Die Federkonstante des Schrittmotors ist abhängig von der Schrittposition. Insbesondere die Federkonstante zwischen zwei Vollschritten kann winkelabhängig sein.
- Die Fehler beim Anfahren einer Position sind bei einem Schrittmotor abhängig von der zuvor angefahrenen Position (Hysterese).

Ausgehend von dem letztgenannten Stand der Technik ist es daher Aufgabe der vorliegenden Erfindung, ein Fehlerkorrekturverfahren zu schaffen, das auf das Winkelmeßgerät als direkten Bestandteil verzichten kann und mit dessen Hilfe stochastische Fehler von Schrittmotoren weiter reduziert und systematische Fehler unter spezieller Berücksichtigung der Eigenschaften eines Schrittmotors korrigiert werden, wobei insbesondere auch dynamische Fehler erfaßt werden sollen.

Diese Aufgabe wird bei einem gattungsgemäßen Verfahren dadurch gelöst, daß durch Messungen Motorstellungen bei mindestens einer bestimmten Phasenstromkombination jedoch unterschiedlichen Motorbelastungen erfaßt werden, wonach eine lastabhängige Phasenverschiebung ermittelt und in der Steuerung berücksichtigt wird.

Weitere vorteilhafte Weiterbildungen der Erfindung sind in den Unteransprüchen wiedergegeben.

Das erfindungsgemäße Verfahren ermöglicht also nicht nur eine statische Fehlerkorrektur, sondern auch eine dynamische. So kann mit dem erfindungsgemäßen Verfahren nicht nur eine lastabhängige Positionsfehlerkorrektur erfolgen, sondern es kann auch eine lastabhängige Korrektur dergestalt erfolgen, daß vorgegebene Geschwindigkeiten eingehalten werden können.

Hierdurch wird ein besonders gleichförmiger vibrationsarmer Lauf des Motors erreicht, wie er z.B. für die Steuerung von Roboterarmen erwünscht ist. Durch die Ermittlung der Phasenverschiebung bei mehreren Phasenstromkombinationen (Anspruch 2) läßt sich die Phasenverschiebung mit höherer Genauigkeit bzw. eine winkelabhängige Phasenverschiebung ermitteln, was eine zusätzliche Genauigkeitssteigerung bewirkt.

Werden vor der Ermittlung der lastabhängigen Phasenverschiebung und der Fehlerkorrektur die Phasenstromverläufe der Einzelphasen in der Signalgröße relativ zueinander verändert, so daß der Fehleranteil, der die gleiche Periodizität wie die Einzelphasen besitzt, verringert wird (Anspruch 3), bewirkt dieses, daß der Motor auch bei Belastung ein geringeres Fehlerverhalten zeigt und die dann zu korrigierenden Fehler insgesamt geringer werden, was wiederum einen positiven Einfluß auf die erreichbare Fehlerreduktion hat. Durch dieses Verfahren können beispielsweise Unterschiede zwischen den einzelnen Schrittmotorspulen teilweise kompensiert werden. Einen ähnlichen Einfluß auf das Fehlerverhalten des unkorrigierten Motors hat die Veränderung der Phasenlage der Phasenströme zueinander (Anspruch 4). Hierdurch können geometrische Winkelfehler der Spulenanordnung teilweise kompensiert werden. Eine weitere Fehlerkorrekturmaßnahme zielt auf die Winkelfehler zwischen zwei Hauptschritten. Durch eine zusätzliche Modulation der Phasenströme zwischen den Hauptschritten kann die Steifheit des Schrittmotors beeinflußt werden.

Erfolgt die Modulation in der Art, daß der Motor winkelunabhängig die gleiche Steifheit aufweist (Anspruch 5), so läßt sich der Motor nach erfolgter Fehlerkorrektur bei unterschiedlichen Drehmomenten mit kleineren Restfehlern betreiben. Schwanken die vom Schrittmotor aufzubringenden Drehmomente stark, so kann eine sehr gute Fehlerkorrektur erzielt werden, wenn das aktuelle Drehmoment gemessen wird und der Fehlerkorrektureinheit dieses mitgeteilt wird, so daß diese die optimale Phasenverschiebung für die Korrektur wählen kann (Anspruch 6).

Für die meßtechnische Erfassung der Schrittmotorfehler wird vorgeschlagen, daß zunächst festgelegt wird, welches Drehmoment der Schrittmotor im Anwendungsfall abgeben soll bzw. in welchem Drehmomentbereich der Motor fehlerkorrigierend arbeiten soll.

Ist der Motor für den Betrieb bei konstantem Drehmoment vorgesehen, so kann der Motor für die Aufnahme der systematischen Fehler mit einem hochgenauen Winkelmeßsystem gekoppelt werden, wenn sichergestellt wird, daß der Motor bei der Aufnahme der Fehler mit genau diesem oder einem zumindest ähnlichen Drehmoment belastet wird. Für eine optimale Fehlerkorrektur, insbesondere für eine dynamische Fehlerkorrektur (Geschwindigkeitskorrektur), ist es unter Umständen erforderlich, die aufgenommene Fehlerkurve für die Fehlerkorrektur geringfügig in der Phase zu verschieben. Ansonsten können Restfehler auftreten, die eine Ähnlichkeit zu der Ableitung der Fehlerkurve multipliziert mit einem positiven oder negativen Faktor haben. Die zuvor beschriebene Phasenverschiebung wird insbesondere bei einer dynamischen Aufnahme der Fehlerkurve des Schrittmotors erforderlich.

Soll der Motor beispielsweise später für das Verstellen einer optischen Komponente eingesetzt werden, für das kein Drehmoment erforderlich ist, so muß bei der Fehleraufnahme an den Schrittmotor auch ein Winkelmeßsystem angekoppelt werden, das kein Drehmoment erfordert oder ist dies nicht der Fall, muß eine Phasenverschiebung der aufgenommenen Fehlerkurve für die Fehlerkorrektur stattfinden.

Diese Art der Fehlerkorrektur arbeitet aber nur bei konstantem Drehmoment. Würde der Motor nun bei einem anderen Drehmoment betrieben werden, führt dieses zu einem Anstieg der systematischen Restfehler. Ein großer Teil diese Restfehler weist eine Ähnlichkeit zu der Ableitung der Fehlerkurve des Schrittmotors multipliziert mit einem positiven oder negativen Faktor auf. Das Vorzeichen und die Größe dieses Faktors ist dabei vom Drehmoment abhängig. Verursacht wird dieses Verhalten u.a. durch das elastische Verhalten des über Spulen induzierten Magnetfeldes. Eine Korrektur dieses Fehleranteils kann durch eine drehmomentabhängige Phasenverschiebung der aufgenommenen Fehlerkurve für die Korrektur erfolgen.

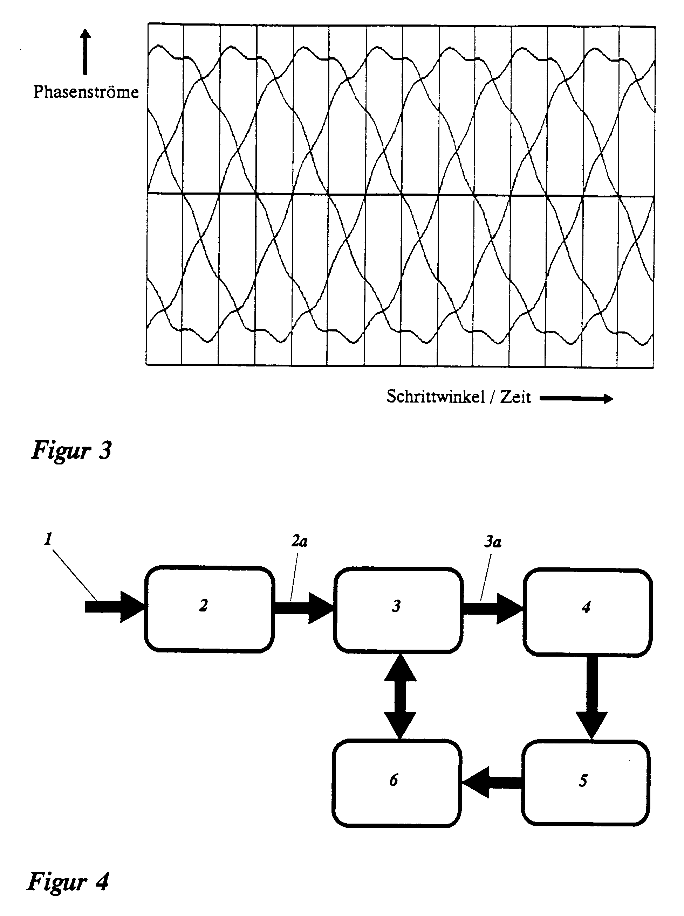

Darüber hinaus können weitere Fehler mit deutlich periodischem Verhalten auftreten. Einer dieser Fehleranteile hat die Periodenlänge eines Vollschrittes und weist, wie in Figur 2 dargestellt, näherungsweise sinusförmiges Verhalten aufweist (Die Rasterung in Figur 2 entspricht jeweils einem Vollschritt). Verursacht wird dieser Fehler durch eine drehwinkelabhängige Federkonstante der durch das Magnetfeld des Motors gebildeten Feder im Bereich zwischen zwei Vollschritten. Zur Korrektur eines derartigen drehmomentabhängigen Fehlers wird erfindungsgemäß vorgeschlagen, daß die den Motor ansteuernden Phasenströme so verändert werden, daß die Federkonstante weitgehend drehwinkelunabhängig wird. Das kann beispielsweise dadurch geschehen, daß die Summe der durch den Schrittmotor fließenden Ströme drehwinkelabhängig so verändert wird, daß die durch das Magnetfeld des Motors erzeugte Drehfeder im Bereich zwischen zwei Vollschritten eine zumindest näherungsweise drehwinkelunabhängige Federkonstante aufweist. Figur 3 zeigt beispielhaft, wie eine Veränderung der Phasenströme bei einem Fünfphasenschrittmotor aussehen könnten, um eine drehwinkelunabhängige Federkonstante zu erhalten. Die Rasterung in der Zeitachse entspricht jeweils einem Vollschritt. Fehleranteile mit einer anderen Periodizität aber konstanter Amplitude können ebenfalls durch periodische Summenstromänderungen reduziert werden.

Bevor jedoch die oben beschriebenen Fehlerkorrekturen durchgeführt werden, ist es ratsam, zunächst durch Veränderung der Signalgröße der Einzelstromverläufe und/oder durch Veränderung der Phasenlage der Einzelstromverläufe zueinander einen Zustand zu erreichen, bei dem möglichst kleine Fehler mit konstanter Amplitude auftreten. Ist dieser Zustand erreicht, weist der Schrittmotor in der Regel ein besser korrigierbares Verhalten für wechselnde Drehmomente auf.

Die oben beschriebene Arbeitsanweisung kann im praktischen Fall der Rotationsschrittmotoren wie folgt aussehen: Zunächst werden die Fehler des nicht-fehlerkorrigierten Motors bei beliebiger Motorbelastung gemessen. Anschließend wird durch Fourier- oder harmonische Analyse der Fehleranteil ausgewählt, der die Periodendauer des Ansteuersignals einer Einzelphase besitzt (Bei einem Fünfphasenschrittmotor mit 500 Vollschritten beträgt die Periodendauer spielsweise 10 Vollschritte). Als nächstes werden dann die kungsfaktoren für die verschiedenen Phasenströme (z.B. über Potentiometer) solange verändert, bis der ausgewählte Fehleranteil minimal wird. Alternativ hierzu zur Erreichung eines vergleichbaren Effektes oder zusätzlich zur weiteren Fehlerkorrektur, können die Phasenströme relativ zueinander in der Phase verschoben werden. Unabhängig vom gewählten Verfahren zeigt der Schrittmotor in der Regel nun ebenfalls eine wesentlich geringere Lastabhängigkeit. In diesem grob korrigierten Zustand sind dem Motor verschiedene Drehmomentbelastungen zuzuführen. Dabei werden erneut die Fehler aufgenommen. Ausgewählt werden diesmal die Fehleranteile mit kürzerer Periodendauer als zuvor. Durch die Modulation sämtlicher Einzelphasenströme mit einem periodischen (meist sinusförmigen) Signal unter Beibehaltung des Verhältnisses der Einzelphasenströme kann die Federkonstante des Motors im Bereich zwischen den Vollschritten konstanter gemacht werden, was zur Folge hat, daß die Lastabhängigkeit des Motors reduziert wird. Die verbleibenden Restfehler sind dann gemäß der bereits beschriebenen Methode zu beseitigen.

Die meßtechnische Erfassung der Schrittmotorfehler mit kleinsten Drehmomenten wird vorteilhaft mittels eines optischen Meßstandes ermittelt, der aus einer Lichtquelle,einem mit einem Polarisationsprisma versehenen, motorisch angetriebenen Winkelmeßgerät, dem zu vermessenden ebenfalls mit einem Polarisationsprisma versehenen Schrittmotor und einem Lichtdetektionssystem besteht. Die Lichtquelle liefert einen gerichteten polarisierten oder unpolarisierten Strahl, der das Winkelmeßgerät und den Schrittmotor in ihren jeweils mit Bohrungen versehenen Rotationsachsen passiert, wobei die beiden zugehörigen Polarisationsprismen durchstrahlt werden. Sind beide Polarisationsprismen gegeneinander um 90° rotiert, so mißt das Lichtdetektionssystem minimale Intensität für den auftreffenden Strahl. Wird nach einer Winkeldrehung des Winkelmeßgerätes oder des Schrittmotors mit der jeweils anderen Komponente wieder der Zustand minimaler Intensität angestrebt, so erhält man anschließend wieder die konstante Winkeldifferenz von 90° zwischen beiden Komponenten. Durch dieses Verfahren läßt sich eine mechanische Kupplung zwischen Winkelmeßgerät und Schrittmotor vermeiden. Gegenüber einer mechanischen Kupplung hat dieses Verfahren erhebliche Vorteile, da es geringere Fehler aufweist und die aufwendigen Justierarbeiten für die Kupplung entfallen. Darüber hinaus braucht der Schrittmotor keine Leistung für den Antrieb des Winkelmeßgerätes aufzubringen.

Die Erfindung ist nachfolgend anhand von in den Figuren 4 bis 6 schematisch dargestellten Ausführungsbeispielen näher erläutert.

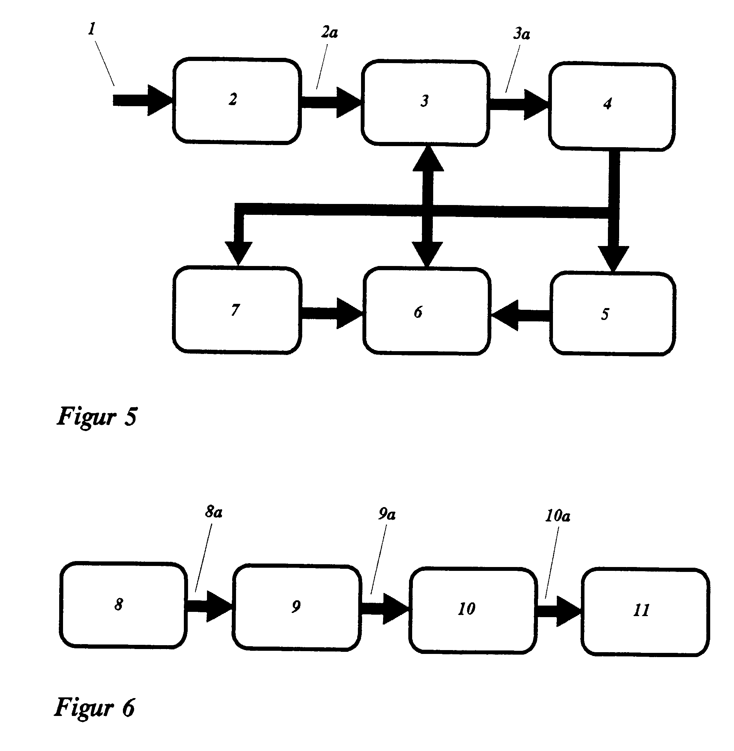

Es zeigen Figur 4 und Figur 5 zwei mögliche Arten, das Fehlerkorrekturverfahren zu realisieren. Mit der in Figur 4 gezeigten Anordnung erfolgt eine Fehlerkorrektur für ein konstantes bekanntes Drehmoment, während bei der in Figur 5 dargestellten Anordnung eine drehmomentunabhängige Fehlerkorrektur erfolgt. Figur 6 zeigt ein Verfahren zur Vermessung der Fehler eines Schrittmotors ohne Beaufschlagung eines Drehmomentes. Alle Figuren zeigen Blockschaltbilder.

Beschreibung der in Figur 4 gezeigten Anordnung:

Extern vorgegeben wird ein Sollwinkel 1. Bei einer Schrittmotoransteuerung ist es der Winkel, der angefahren werden soll. Ein fehlerkorrigiertes System sollte diesen Sollwinkel mit möglichst hoher Genauigkeit anfahren.

Übergeben wird der Sollwinkel 1 einem Impulsgenerator 2. Es handelt sich hierbei um eine Funktionseinheit, die Schrittimpulse 2a erzeugt. Sie legt das Beschleunigungs- und Abbremsverhalten des Schrittmotors sowie dessen maximale Schrittfrequenz fest.

Die vom Impulsgenerator 2 erzeugten Impulse 2a werden einer nachgeschalteten Zwischenschrittansteuerung 3 (hier als Sinusstromansteuerung ausgebildet) zugeführt. Diese hat die Aufgabe, entsprechende Phasenströme 3a für den Schrittmotor 4 zu erzeugen.

Der Schrittmotor selbst 4 ist fest mit einem relativ ungenauen Bezugspunktschalter 5 verbunden. Die Genauigkeit des Bezugspunktschalters 5 muß lediglich in der Größenordnung eines Hauptschrittes liegen. Als hochgenauer Bezugspunkt wird eine Schrittmotorposition verwendet, für die der Bezugspunktschalter 5 aktiv ist und die Zwischenschrittansteuerung 3 eine bestimmte Phasenstromkombination 3a liefert.

Nach einmaligem Aufsuchen des Bezugspunktes ist die Fehlerkorrektureinheit 6 initialisiert. Ab jetzt gibt es eine bekannte feste Kopplung zwischen der Mechanik des Schrittmotors und der Fehlerkorrektureinheit 6. Die Fehlerkorrektureinheit 6 wirkt ab diesem Zeitpunkt so auf die Zwischenschrittansteuerung 3 ein, daß diese dem Schrittmotor 4 solche Phasenströme zur Verfügung stellt, daß der Schrittmotor 4 die um den systematischen Fehler korrigierte Position anfährt, der Schrittmotor 4 also den Sollwinkel 1 anfährt.

Extern oder intern vorgegeben wird der Fehlerkorrektureinheit 6 das Drehmoment, für das die Korrektur stattfinden soll. Diese Vorgabe kann z.B. über Schalter, elektrische Signale oder Software erfolgen.

In Abhängigkeit vom Sollwinkel 1 und dem vorgegebenen Drehmoment wird dann z.B. in einer abgelegten Fehlertabelle oder Fehlerkorrekturtabelle die Phasenstromkombination für das vorgegebene Drehmoment ermittelt. Korrekturen für andere Drehmomente können dann durch einfaches Verschieben der Tabelle erzeugt werden. Dies ist z.B bei zeigerorientierten Programmiersprachen wie C sehr leicht möglich. Die Verschiebung der Tabelle ermöglicht es dem Anwender, daß er das System sehr schnell auf das aktuelle Drehmoment anpassen kann.

Die Fehlerkorrektur ist diesem Fall so ausgelegt, daß nicht nur der Sollwinkel 1 mit hoher Genauigkeit angefahren wird, sondern zusätzlich auch noch eine Geschwindigkeitskorrektur stattfindet. Diese erfolgt ebenfalls durch eine geschwindigkeitsabhängige Phasenverschiebung. Geschwindigkeitsänderungen wirken in der Regel wie Drehmomentänderungen auf den Schrittmotor 4.

Beschreibung der in Figur 5 gezeigten Anordnung:

Die in Figur 5 gezeigte Anordnung entspricht zunächst einmal der in Figur 4 gezeigten Anordnung und funktioniert entsprechend. Zusätzlich eingefügt ist jedoch eine Drehmomentanalyseeinheit 7. Diese analysiert das Drehmoment und wirkt derart auf die Fehlerkorrektureinheit 6 ein, daß diese in Abhängigkeit vom Drehmoment eine Phasenverschiebung der Korrekturwerte (bezogen auf den Bezugpunkt) durchführt, so daß die tatsächlich auftretenden Fehler für dieses Drehmoment stark reduziert werden. Die Fehlerkorrektur des Schrittmotors wird hierdurch weitgehend drehmomentunabhängig.

Beschreibung der in Figur 6 gezeigten Anordnung zur drehmomentfreien Vermessung der Fehler eines Schrittmotors:

Eine Lichtquelle 8 erzeugt Licht, das stark gerichtet ist (z.B. Laserlicht) und die nachfolgenden Komponenten Winkelmeßgerät 9 und Schrittmotor 10 in ihren Rotationsachsen durchstrahlt, bis es auf einen Lichtdetektor 11 trifft. Jeweils ein Polarisationsprisma, das das hindurchtretende Licht linear polarisiert, ist auf dem Winkelmeßgerät 9 und dem Schrittmotor 10 befestigt.

Das von der Lichtquelle 8 gelieferte Licht 8a kann entweder polarisiert oder unpolarisiert sein. Auszuschließen ist dabei jedoch der Zustand linearer Polarisation. Die besten Ergebnisse sind mit unpolarisiertem oder zirkular polarisiertem Licht zu erwarten, da das durch das Polarisationsprisma des Winkelmeßgerätes 9 linear polarisierte Licht 9a nun unabhängig von der Winkelstellung des Winkelmeßgerätes 9 die gleiche Intensität aufweist.

Das linear polarisierte Licht 9a wird anschließend durch das Polarisationsprisma des Schrittmotors 10 erneut linear polarisiert, wobei die Intensität 10a abhängig von der Winkelstellung der beiden Polarisationsprismen zueinander ist. Sind die beiden Prismen um 90° gegeneinander gedreht, mißt der Lichtdetektor 11 minimale Intensität. Wird nach einer Rotation von Winkelmeßgerät 9 oder Schrittmotor 10 mit der jeweils anderen Komponente wieder dieser Zustand erreicht, entsteht dadurch eine hochgenaue feste Kopplung zwischen Winkelmeßgerät 9 und Schrittmotor 10.

Die in Figur 6 gezeigte Anordnung funktioniert ebenso, wenn die Komponenten Winkelmeßgerät 9 und Schrittmotor 10 gegeneinander ausgetauscht werden.

## Patentansprüche

1. Verfahren zur Fehlerkorrektur bei der Ansteuerung eines in Haupt- und Zwischenschritten durch Phasenstromkombination ansteuerbaren Schrittmotors, bei dem anhand von Messungen Motorstellungen bei bestimmten Phasenstromkombinationen erfaßt werden, wonach jeder Phasenstromkombination eine fehlerkorrigierte Motorstellung zugeordnet und in der Steuerung berücksichtigt wird, dadurch gekennzeichnet, daß durch Messungen Motorstellungen bei mindestens einer bestimmten Phasenstromkombination jedoch unterschiedlichen Motorbelastungen erfaßt werden, wonach eine lastabhängige Phasenverschiebung ermittelt und in der Steuerung berücksichtigt wird.

2. Verfahren nach Anspruch 1, dadurch gekennzeichnet, daß die Ermittlung der Phasenverschiebung bei mehreren Phasenstromkombinationen unterschiedlicher Motorstellung erfolgen und daß die senstromverschiebung in Abhängigkeit der Motorstellung erfolgt.

3. Verfahren nach Anspruch 1 oder 2, dadurch gekennzeichnet, daß vor der Ermittlung der lastabhängigen Phasenverschiebung die Phasenstromverläufe der Einzelphase in der Signalgröße relativ zueinander verändert werden, so daß der Fehleranteil, der die gleiche Periodizität wie die Einzelphasen besitzt, verringert wird.

4. Verfahren nach Anspruch 1 oder 2, dadurch gekennzeichnet, daß vor der Ermittlung der lastabhängigen Phasenverschiebung die Phasenstromverläufe der Einzelphasen in der Phasenlage relativ zueinander verändert werden, so daß der Fehleranteil, der die gleiche Periodizität wie die Einzelphasen besitzt, verringert wird.

5. Verfahren nach einem der Ansprüche 1 bis 4, dadurch gekennzeichnet, daß vor der Ermittlung der lastabhängigen Phasenverschiebung die Phasenstromverläufe zwischen den Hauptschritten so moduliert werden, daß der Schrittmotor eine von der Motorstellung weitgehend unabhängige Federkonstante aufweist.

6. Verfahren nach einem der Ansprüche 1 bis 5, dadurch gekennzeichnet, daß während des Betriebs des Motors die Motorbelastung ermittelt und der Motorsteuerung zum Zwecke der Fehlerkorrektur übermittelt wird.

## Claims

1. An error correcting method for driving a stepper motor which can be driven in main and intermediate steps by phase current combination, in which by way of measurements, motor positions at certain phase current combinations are recorded, whereupon an error corrected motor position is allocated to each phase current combination and taken into account in the control, characterised in that by way of measurements, motor positions at at least one given phase current combination but at various motor loads can be recorded, whereupon the phase shift dependent on the load may be determined and taken into account in the control.

2. An method according to claim 1, characterised in that the determination of the phase shift is effected at various phase current combinations at a different motor position and that the phase current shift is effected dependent on the motor position.

3. A method according to claims 1 or 2, characterised in that before determining the load dependent phase shift, the phase current courses of the individual phases are altered in the signal size relative to one another, so that the error component which has the same periodicity as the individual phases becomes reduced.

4. A method according to claim 1 or 2, characterised in that before determining the load dependent phase shift, the phase current courses of the individual phases are altered in the phase position relative to one another, so that the error component which has the same periodicity as the individual phases becomes reduced.

5. A method according to one of claims 1 to 5, characterised in that before determining the load dependent phase shift, the phase current courses between the main steps are so modulated that the stepper motor comprises a spring constant which is largely independent of the motor position.

6. A method according to one of claims 1 to 5, characterised in that during the operation of the motor, the motor loading is determined and transmitted to the motor control for the purpose of the error correction.

## Revendications

1. Procédé de correction d'erreurs lors de la commande d'un moteur pas-à-pas pouvant être commandé selon des pas principaux et des pas intermédiaires au moyen d'une combinaison de courants de phase, selon lequel des positions du moteur sont détectées sur la base de mesures, pour des combinaisons déterminées de courants de phase, après quoi une position, dont l'erreur est corrigée, du moteur est associée à chaque combinaison de courants de phase et est prise en compte dans la commande, caractérisé en ce que des positions du moteur sont détectées, par des mesures, pour au moins une combinaison déterminée de courants de phase, mais pour des charges différentes du moteur, un déphasage dépendant de la charge étant ensuite déterminé et pris en compte dans la commande.

2. Procédé selon la revendication 1, caractérisé en ce que la détermination du déphasage s'effectue pour plusieurs combinaisons de courants de phase à des positions différentes du moteur et en ce que le décalage des courants de phase s'effectue en fonction de la position du moteur.

3. Procédé selon la revendication 1 ou 2, caractérisé en ce qu'avant la détermination du déphasage dépendant de la charge, les allures de variation des courants des phases individuelles sont modifiées les unes par rapport aux autres, quant à la grandeur du signal, afin que la composante d'erreur, qui possède la même périodicité que les phases individuelles, soit réduite.

4. Procédé selon la revendication 1 ou 2, caractérisé en ce qu'avant la détermination du déphasage dépendant de la charge, les allures de variation des courants des phases individuelles sont modifiées les unes par rapport aux autres, quant à la position de phase, afin que la composante d'erreur, qui possède la même périodicité que les phases individuelles, soit réduite.

5. Procédé selon l'une des revendications 1 à 4, caractérisé en ce qu'avant la détermination du déphasage dépendant de la charge, les allures de variation des courants de phase sont modulées entre les pas principaux de telle sorte que le moteur pas-à-pas possède une constante d'élasticité largement indépendante de la position du moteur.

6. Procédé selon l'une des revendications 1 à 5, caractérisé en ce que, pendant le fonctionnement du moteur, la charge du moteur est déterminée et est transmise à l'unité de commande du moteur en vue de la correction d'erreurs.
